# EUROPÄISCHE PATENTSCHRIFT

(11) **EP 1 199 498 B1**
(45) Veröffentlichungstag und Bekanntmachung des Hinweises auf die Patenterteilung: **15.11.2006**
(21) Anmeldenummer: 01119391.9
(22) Anmeldetag: 11.08.2001
(51) Int. Cl.: F16H 61/02, F16H 59/02

(54) **Steuervorrichtung für ein Getriebe eines Kraftfahrzeuges**
Control device for transmission of a motor vehicle
Dispositif de commande pour transmission d'un véhicule automobile

(30) Priorität: 20.10.2000 DE 10052881
(43) Veröffentlichungstag der Anmeldung: 24.04.2002
(73) Patentinhaber: Dr.Ing. h.c.F. Porsche Aktiengesellschaft, 70435 Stuttgart (DE)
(72) Erfinder: Heim, Udo, 71229 Leonberg (DE)

(56) Entgegenhaltungen:
- EP-A- 1 178 244
- WO-A-00/00760
- WO-A-00/04306
- DE-A- 4 312 718
- DE-A1- 4 305 903
- US-A- 5 467 277

## Beschreibung

Die Erfindung betrifft eine Steuervorrichtung für ein Getriebe eines Kraftfahrzeuges, wobei die Steuervorrichtung Gänge oder Übersetzungen des Getriebes nach Maßgabe eines Steuerprogramms einstellt.

Getriebe mit einer derartigen Steuervorrichtung werden üblicherweise als Automatikgetriebe bezeichnet. Die verwendeten Getriebe können verschiedener Bauart sein. Am weitesten verbreitet sind sog. Stufenautomaten, die baulich bedingt eine feste Anzahl von Gängen (=Übersetzungsstufen) aufweisen. Hinzu gekommen sind stufenlose Getriebe, deren Übersetzung grundsätzlich frei einstellbar ist. Aus der DE 41 20 540 C1 ist es für stufenlose Getrieben auch bekannt, Übersetzungen vorzugeben, um so ein Stufengetriebe nachzubilden.

Unabhängig von der Getriebebauart kann es vorgesehen sein, die Getriebe in einer automatischen Betriebsart oder in einer vom Fahrer beeinflussten, manuellen Betriebsart zu betreiben. Bei der automatischen Betriebsart wählt ein in der Steuervorrichtung ablaufendes Steuerprogramm nach Maßgabe von Betriebsparametern des Kraftfahrzeuges automatisch die Gänge bzw. Übersetzungen des Getriebes aus. In der manuellen Betriebsart hingegen hat der Fahrer über eine Bedienvorrichtung wie beispielsweise einen Schalthebel oder eine am Lenkrad angeordnete Schaltwippe einen direkten Zugriff auf die verschiedenen Gänge bzw. Übersetzungen des Getriebes. In der manuellen Betriebsart können jedoch automatisch Schaltungen ausgelöst werden, wenn beispielsweise der Betriebsbereich der Antriebsmaschine verlassen wird oder ein Kick-down-Schalter betätigt wird. Außerdem kann es vorgesehen sein, dass bestimmte Schaltprogramme für die automatische Betriebsart auswählbar sind, wie beispielsweise ein Sportprogramm oder ein Winterprogramm. Derartige Auswahlmöglichkeiten sind hier als Optionen oder Parameter zur Beeinflussung des Steuerprogramms bezeichnet.

Aus der DE 43 05 903 A1 geht eine Steuervorrichtung für ein Kraftfahrzeuggetriebe hervor, bei der mit dem Wählhebel, also der Bedienvorrichtung zur Auswahl eines Ganges oder einer Übersetzung, neben Fahrbereichen des Getriebes eine Programmierung im Sinne einer Veränderung der Lage von Schaltpunkten oder die Anwahl eines speziellen Steuerprogramms für bestimmte Fahrcharakteristika ermöglicht sind.

Die WO 00/00760 A zeigt eine gattungsbildende Steuervorrichtung für ein stufenloses Getriebe, bei der eine bestehende Steuerung um einen gestuften Betrieb erweiterbar ist. Die Zahl und die Lage der voreingestellten Übersetzungen sind dabei über eine Servicefunktion auswähl- und veränderbar.

Es ist Aufgabe der Erfindung, die Einstellung von Optionen oder Parametern zur Beeinflussung des Steuerprogramms zu verbessern.

Diese Aufgabe wird erfindungsgemäß mit den Merkmalen des Patentanspruches 1 gelöst. Es wird vorgeschlagen, in der Steuervorrichtung einen Speicher vorzusehen, in dem die Optionen oder Parameter zur Beeinflussung des Steuerprogramms änderbar abgelegt sind, wobei das Steuerprogramm ein gestuftes Getriebe nachbildet. Mit dem Speicher verbunden ist eine Eingabevorrichtung, die auf den Speicher schreibend zugreifen kann. Die Eingabevorrichtung weist eine Anzeige und eine Vorrichtung zur Einstellung der Optionen oder Parameter auf. Somit ist es möglich, über die Eingabevorrichtung Optionen oder Parameter zur Beeinflussung des Steuerprogramms einzustellen oder auszuwählen. Die Eingabevorrichtung ist dabei für den Fahrer zugänglich, so dass diese Parameter oder Optionen zur Beeinflussung des Steuerprogramms jederzeit, wenn auch nicht notwendigerweise im laufenden Betrieb des Kraftfahrzeuges, verändern kann. In vorteilhafter Weise hat der Fahrer dadurch in einfacher Weise Zugriff auf Einstellungen des Getriebes, und er kann auf diese Weise das Verhalten des Getriebes an seine persönlichen Wünsche anpassen, ohne eine Werkstatt o. ä. aufsuchen zu müssen.

Insbesondere folgende Optionen oder Parameter sollen einstellbar sein:
- Wenn das Getriebe eine stufenloses Getriebe ist und das Steuerprogramm ein gestuftes Getriebe nachbildet, soll als Option der Typ des nachgebildeten Getriebes und/oder die Zahl der Gänge dieses nachgebildeten Getriebes einstellbar sein. Der Typ des Getriebes kann beispielweise ein Economy-Getriebe (mit lang ausgelegtem höchsten Gang) oder ein Sportgetriebe (Höchstgeschwindigkeit wird im höchsten Gang erreicht) sein. Die Anzahl der Gänge des nachgebildeten Getriebes soll vorzugsweise zwischen 5 und 7 liegen.
- Das Verhalten, wenn eine das Getriebe antreibende Brennkraftmaschine ihre obere Drehzahl erreicht, soll wählbar sein. Vorzugsweise soll eine automatische Umschaltung des Getriebes bei Erreichen der oberen Drehzahlgrenze schaltbar sein. Diese Einstellung ist nur in der vom Fahrer beeinflussten Betriebsart wirksam.
- Das Verhalten des Getriebes bei Betätigung eines Kick-down-Schalters soll wählbar sein. Als auszuwählende Optionen kommen insbesondere in Frage: unwirksam; Rückschaltung in den kleinsten bei den aktuellen Betriebsbedingungen zulässigen Gang; Rückschaltung um einen Gang. Bei Auswahl der letzt genannten Option hat der Kick-down-Schalter dieselbe Funktion wie eine Bedienvorrichtung des Getriebes zum Auslösen einer Rückschaltung.

Vorteilhafte Weiterbildungen der Erfindung sind in den Unteransprüchen beschrieben.

So wird vorgeschlagen, als Eingabevorrichtung vorzugsweise einen Bordcomputer oder ein Navigationssystem, ggf. auch ein Radio oder ein Klimasteuergerät zu verwenden. Durch die Verwendung bereits im Kraftfahrzeug vorhandener Eingabemittel werden keine zusätzlichen Eingabevorrichtungen benötigt, so dass der bauliche Aufwand vermindert ist.

Weiterhin wird vorgeschlagen, dass die Eingabevorrichtung über eine Bedienvorrichtung zur Auswahl eines Ganges oder einer Übersetzung des Getriebes bedienbar sein soll. Eine solche Bedienvorrichtung ist beispielsweise ein Schalthebel oder vorzugsweise eine am Lenkrad angeordnete Schaltwippe. Damit ergibt sich eine sinnfällige Bedienung der Eingabevorrichtung, denn durch Verwendung einer dem Getriebe zugeordneten Bedienvorrichtung ist klar erkennbar, dass die ansonsten zu anderen Zwecken gebrauchte Eingabevorrichtung nun zur Beeinflussung der Steuervorrichtung für das Getriebe verwendet wird.

Die Verbindung zwischen der Eingabevorrichtung und der Steuervorrichtung soll vorzugsweise über einen Datenbus wie z.B. einen CAN-Bus erfolgen. Ein solcher Datenbus ist in modernen Fahrzeugen ohnehin vorgesehen, so dass zusätzliche Leitungen für die Verbindung der Eingabevorrichtung mit der Steuervorrichtung entfallen.

Eine Eingabe über die Eingabevorrichtung soll nur dann möglich sein, wenn ein Stillstand des Kraftfahrzeuges erkannt ist. Vorzugsweise wird hierzu geprüft, ob die Fahrgeschwindigkeit Null ist und am Getriebe eine Parkstellung gewählt ist. Auf diese Weise wird vermieden, dass der Fahrer oder ein Beifahrer versehentlich im laufenden Betrieb des Kraftfahrzeuges Parameter oder Optionen verändert. Insbesondere durch Prüfung der Parkstellung des Getriebes ist gewährleistet, dass sich das Kraftfahrzeug nicht lediglich verkehrbedingt im Stillstand befindet.

Eine zusätzliche Sicherung vor einer versehentlichen Änderung der Optionen oder Parameter kann dadurch erzielt werden, dass eine Aktualisierung des Speichers, d.h. Eingaben oder Änderungen über die Eingabevorrichtung in den Speicher, erst dann berücksichtigt wird, wenn das Kraftfahrzeug bzw. eine das Getriebe antreibende Brennkraftmaschine neu gestartet wurde. Dadurch ist es nicht mehr möglich, im laufenden Betrieb Optionen oder Parameter zu ändern, und dem Fahrer wird durch den notwendigen Neustart deutlich vor Augen geführt, dass es sich um einen bleibenden Eingriff in das Verhalten der Steuervorrichtung und damit das Verhalten des Getriebes handelt.

Durch die Einstellbarkeit verschiedener Optionen oder Parameter kann sich das Problem ergeben, dass der Fahrer nicht erkennt, welche Optionen oder Parameter gerade gewählt sind. Hierzu werden die nachfolgenden Maßnahmen vorgeschlagen.

So kann es vorgesehen sein, nach einer vorgegebenen Stillstandszeit des Kraftfahrzeuges einen vorgegebenen Standardsatz von Optionen oder Parametern einzustellen. Die Stillstandszeit ist dabei vorzugsweise so gewählt, dass es sich nicht lediglich um eine kurze Fahrtunterbrechung handelt. Auf diese Weise kann sichergestellt werden, dass bei erneuter Inbetriebnahme des Kraftfahrzeuges das Getriebe sich in einem definierten Grundzustand befindet. Dieser im Standardsatz festgelegte Grundzustand sollte dabei vorzugsweise so gewählt sein, dass Optionen und Parameter gewählt sind, die einen sicheren Betrieb des Kraftfahrzeuges gewährleisten. Für die o.g. Optionen würde dies beispielsweise bedeuten:
- Getriebetyp = Sechs-Gang-Sportgetriebe,
- automatische Hochschaltung bei Erreichen der oberen Drehzahlgrenze = eingeschaltet,
- Betätigung des Kick-down-Schalters = Rückschaltung in den kleinsten zulässigen Gang.

Um die Eingabevorrichtung verwenden zu können, muss auch ein Anzeigevorrichtung für die gerade ausgebildeten Optionen und Parameter vorgesehen sein. Es wird vorgeschlagen, eine solche Anzeigevorrichtung, oder eine andere von der Eingabevorrichtung unabhängige Anzeigevorrichtung, bei Inbetriebnahme des Kraftfahrzeugs stets zu aktivieren, um dem Fahrer auf diese Weise die aktuell gewählten Optionen und Parameter zu verdeutlichen. Zur Sicherung gegen eine unbeabsichtigte Inbetriebnahme kann es vorzugsweise vorgesehen sein, eine Quittungsvorrichtung vorzusehen, mit deren Hilfe die angezeigten Optionen und Parameter bestätigbar sind. Wird diese Quittungsvorrichtung nicht betätigt, so wird eine vorgegebene Grundeinstellung für die Optionen und Parameter eingestellt. Die Quittungsvorrichtung kann insbesondere die Bedienvorrichtung zur Auswahl eines Ganges oder einer Übersetzung sein, wobei sich deren Betätigung zu Quittierung von der üblichen Betätigung unterscheiden muss, um eine versehentliche Quittierung zu vermeiden. Sind als Betätigungsvorrichtung beispielsweise Schaltwippen am Lenkrad vorgesehen, so ist es zur Quittierung notwendig, beide Schalwippen gleichzeitig zu betätigen.

In Fortbildung der Erfindung wird ferner vorgeschlagen, im Speicher mehrere Speicherbereiche vorzusehen, die über eine zusätzliche Auswählvorrichtung wählbar sind. Diese Speicherbereiche können vorzugsweise bestimmten Fahrern zugeordnet sein, wenn im Kraftfahrzeug bereits eine Möglichkeit vorgesehen ist, den Fahrer zu identifizieren (codierter Schlüssel, Wählschalter o.ä.). Auf diese Weise wird bei einem identifiziertem Fahrer das Getriebe mit den von diesem Fahrer gewählten Optionen und Parametern betrieben. Ist der Fahrer nicht identifiziert, so wird das Getriebe in sicherer Weise mit den im Standardsatz eingestellten Optionen und Parameter betrieben.

Zusätzliche Optionen und Parameter können auch für die automatische Betriebsart des Getriebes vorgesehen sein. Bei Steuervorrichtungen, bei denen wie z.B. aus DE 39 22 051 A1 bekannt mehrere Sätze von Zuordnungen von Gängen oder Übersetzungen von Betriebsparametern vorgesehen sind (d.h. mehrere Schaltkennfelder bzw. Regelkennfelder) kann beispielsweise anstelle der automatischen Auswahl der Sätze von Zuordnungen es als Option vorgesehen sein, dass ein Satz von Zuordnungen durch den Fahrer fest einstellbar ist. Ergänzend kann es auch möglich sein, einen üblicherweise nicht vorgesehenen Satz von Zuordnungen, d.h. ein besonderes Schaltprogramm, zu wählen. Ein solches Schaltprogramm kann beispielsweise ein Winterprogramm oder ein Programm zum Anhängerbetrieb sein.

Die Anzeigevorrichtung kann auch in der Weise ausgebildet sein, dass bei Abweichung von den Standarteinstellungen dem Fahrer dauerhaft ein Hinweis, beispielweise durch eine Kontrollleuchte im Bereich der Instrumentierung, angezeigt wird.

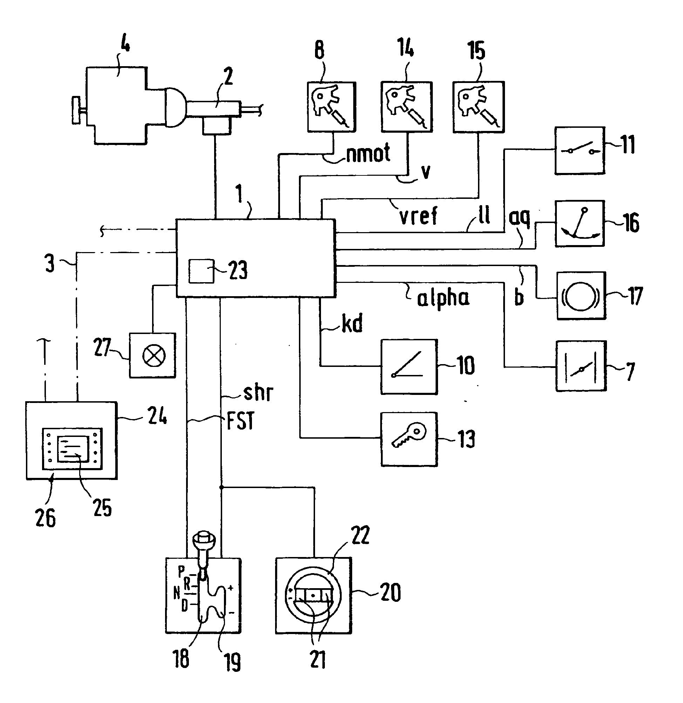

Die Erfindung ist nachstehend anhand des in der Figur dargestellten Ausführungsbeispieles näher erläutert.

Die einzige Figur zeigt im Überblick ein Steuergerät 1 eines Getriebes 2 eines nicht näher gezeigten Kraftfahrzeuges mit einer Brennkraftmaschine 4. In dem Steuergerät 1 wird ein Steuerprogramm ausgeführt, das aus den dem Steuergerät 1 zugeführten Betriebsgrößen des Kraftfahrzeuges Signale zur Steuerung des Getriebes 2 ermittelt. Das Steuergerät 1 ist über einen Datenbus, hier einen CAN-Bus 3, mit anderen Steuergeräten, unter anderem einem Bordcomputer 24, verbunden.

Größen oder Funktionen, die sich mit der Zeit t ändern, sind nachfolgend als Funktionen f(t) der Zeit t dargestellt.

Das Steuergerät 1 steuert wenigstens in Abhängigkeit von der Drosselklappenstellung alpha(t) eines Drosselklappenwinkelgebers 7 und einer Motordrehzahl nmot(t) eines Motordrehzahlgebers 8 der Brennkraftmaschine 4 das Getriebe 2 an. Als weitere Eingangsgrößen erhält das Steuergerät 1 ein Kick-down-Signal kd(t) eines Kick-down-Schalters 10, ein Leerlaufsignal II(t) eines Leerlaufschalters 11 und ein Fahrgeschwindigkeitssignal v(t) eines Fahrgeschwindigkeitgebers 14. Zusätzlich wird vom Steuergerät 1 eine Geschwindigkeit vref(t) eines Referenzgeschwindigkeitsgebers 15 an einer nicht angetriebenen Fahrzeugachse, eine Querbeschleunigung aq(t) eines Querbeschleunigungsgebers 16 und ein Bremssignal b(t) eines Bremssignalgebers 17 erfasst und verarbeitet.

Schließlich ist die Steuerung üblicherweise vom Fahrzeugführer über eine Wähleinrichtung 18 zur Vorwahl von Fahrstufen P (Parksperre), R (Rückwärtsgangstufe), N (Leergangsstufe) und D (selbsttätige Einstellung des Übersetzungsverhältnisses u.ä. des stufenlosen Getriebes) beeinflussbar.

Die Wähleinrichtung 18 kann aus der Fahrstufe D, in der die erste, automatische Betriebsart gewählt ist, in eine zweite Schaltgasse 19 bewegt werden, in der die zweite, manuelle Betriebsart gewählt ist und der Fahrzeugführer über die Wähleinrichtung 18 das Übersetzungsverhältnis im Sinne einer Hochschaltung oder einer Rückschaltung beeinflussen kann. Die Wähleinrichtung 18 gibt ein Fahrstufensignal FST und ein Schaltanforderungssignal shr für eine Hochschaltung oder eine Rückschaltung ab. Eine zweite Wähleinrichtung 20 besteht aus zwei Wippschaltern 21, die an einem Lenkrad 22 angeordnet sind. Die Wippschalter 21 erzeugen ebenfalls ein Schaltanforderungssignal shr.

Der Begriff "Hochschalten" oder "Verringern der Übersetzung" steht für eine Übersetzungsänderung, die bei gleichbleibender Eingangsdrehzahl die Ausgangsdrehzahl des Getriebes erhöht. Umgekehrt stehen die Begriffe "Rückschalten" und "Erhöhen der Übersetzung" für eine Übersetzungsänderung im Sinne einer Verringerung der Ausgangsdrehzahl des Getriebes bei gleichbleibender Eingangsdrehzahl.

Das Steuergerät 1 ist als speicherprogrammierbares Steuergerät ausgeführt, in dem im Betrieb ein Steuerprogramm abläuft. Ein innerhalb des Steuergerätes 1 vorgesehener Speicherbereich 23 enthält Parameter und Optionen, die während der Ausführung des Steuerprogramms verwendet werden und zur Beeinflussung des Steuerprogramms dienen. Dabei wird das Steuerprogramm wie folgt beeinflusst.
- Parameter "Gangzahl": Dieser Parameter bestimmt die Anzahl der im Getriebe 2 in der vom Fahrer beeinflussten Betriebsart nachzubildenden Übersatzungen bzw. Gänge.
- Parameter "Getriebeart": Über diesen Parameter wird als Getriebeart entweder ein Economy-Getriebe oder ein Sport-Getriebe gewählt. Bei einem Economy-Getriebe ist der höchste Gang lang ausgelegt; die Höchstgeschwindigkeit des Fahrzeuges wird hier nicht erreicht und an Steigungen ist ein Zurückschalten erforderlich. Bei einem Sport-Getriebe hingegen ist der höchste Gang so ausgelegt, dass hier die Höchstgeschwindigkeit des Kraftfahrzeuges erreicht wird.

Mit Hilfe der Parameter Gangzahl" und "Getriebeart" wählt das Steuerprogramm einen Satz von voreingestellten Übersetzungen zum Betrieb des Getriebes 2 aus.
- Parameter "Kick-down Manuell". Dieser Parameter kann die Werte unwirksam oder Kick-down oder Rückschaltung annehmen.
   Über diesen Parameter wird die Verarbeitung des Kick-down-Signals kd(t) in der vom Fahrer beeinflussten Betriebsart gesteuert. Ist die Option auf den Wert unwirksam gesetzt, so erfolgt keine Verarbeitung. Ist die Option auf den Wert Kick-down gesetzt, so schaltet das Getriebe 2 auf ein Kick-down-Signal kd(t) hin in den kleinstmöglichen Gang zurück, bei dem die Brennkraftmaschine 4 ihr obere Drehzahlgrenze noch nicht erreicht. Ist für die Option der Wert Rückschaltung gewählt, so wird auf ein Kick-down-Signal kd(t) hin eine Rückschaltung vorgenommen. In diesem Falle hat das Kick-down-Signal kd(t) dieselbe Wirkung wie ein Schaltanforderungssignal shr für ein Rückschaltung. Eine mehrfache Betätigung des Kick-down-Schalters 10 führt auch zu mehrfachen Rückschaltungen, solange die Brennkraftmaschine 4 durch die Rückschaltung nicht ihre obere Drehzahlgrenze überschreitet.
- Option "automatische Hochschaltung": Ist diese Option aktiv, so führt das Steuergerät 1 auch in der vom Fahrer beeinflussten Betriebsart eine Hochschaltung automatisch dann aus, wenn die Brennkraftmaschine 4 ihre obere Drehzahlgrenze erreicht.

Der Speicher 23 ist über den CAN-Bus 3 mit einer Eingabevorrichtung, hier einem Bordcomputer 24 verbunden, der mit einer Anzeige 25 und Tasten 26 versehen ist. Unter der Bedingung, dass das Fahrgeschwindigkeitssignal v(t) den Wert Null aufweist und zusätzlich das Fahrstufensignal FST den Wert P aufweist, kann am Bordcomputer 24 eine Auswahlmaske für fahrerspezifische Einstellungen des Getriebes aufgerufen werden. In der Anzeige 25 werden die aktuellen Werte für die oben beschriebenen Parameter und Optionen angezeigt. Über die Tasten 26 können einzelne Parameter und Optionen aufgerufen und verändert werden.

Bei Aufrufen des Punktes "fahrerspezifische Einstellungen" fordert der Bordcomputer 24 über den CAN-Bus 3 die aktuellen Werte der Parameter und Optionen vom Steuergerät 1 an. Das Steuergerät 1 liest diese Werte aus dem Speicher 23 aus und gibt sie über den CAN-Bus aus. Bei jeder Initialisierung des Steuergerätes 1, d. h. beim Neustart der Brennkraftmaschine 4, wird zunächst der Standardsatz von Parametern und Optionen gewählt. Gleichzeitig fordert das Steuergerät 1 über den CAN-Bus 3 die im Bordcomputer 24 gespeicherten Werte der Parameter und Optionen an. Erhält das Steuergerät 1 vom Bordcomputer 24 keine gültigen Werte, so wird der Standardsatz von Parametern und Optionen, der einen sicheren Betrieb des Kraftfahrzeuges erlaubt, verwendet. Im vorliegenden Fall sind als Standartwerte abgelegt:
- Gangzahl = 6,
- Getriebeart = Sport-Getriebe,
- Kick-down Manuell = aus,
- automatische Hochschaltung = ein.

Grundsätzlich werden im Steuergerät 1 die aktuellen Werte der Parameter und Optionen nur dann aktualisiert, wenn sich die Wähleinrichtung 18 in der Stellung P befindet.

Sobald im Bordcomputer 24 der Punkt fahrerspezifische Einstellungen verlassen wird, werden die Werte für Parameter und Optionen im Bordcomputer 24 dauerhaft gespeichert.

Eine Hinweisleuchte 27 ist im Sichtbereich des Fahrer, vorzugsweise im Bereich anderer Anzeigevorrichtungen wie beispielsweise einem Drehzahlmesser angeordnet. Das Steuergerät 1 steuert die Hinweisleute 27 dann an, wenn die Werte für die Parameter und Optionen des Steuerprogramms von den im Steuergerät 1 vorgegebenen Werten abweichen.

## Patentansprüche

1. Steuervorrichtung für ein Getriebe eines Kraftfahrzeuges, wobei das Getriebe ein stufenloses Getriebe ist und die Steuervorrichtung Gänge oder Übersetzungen des Getriebes nach Maßgabe eines Steuerprogramms einstellt, wobei
- das Steuerprogramm ein gestuftes Getriebe nachbildet,
- neben einer automatischen Betriebsart eine vom Fahrer beeinflusste manuelle Betriebsart vorgesehen ist,
- in der Steuervorrichtung ein Speicher vorgesehen ist, in dem Optionen oder Parameter oder Optionen und Parameter zur Beeinflussung des Steuerprogramms änderbar abgelegt sind, und
- eine Eingabevorrichtung mit dem Speicher verbunden ist, wobei die Eingabevorrichtung auf den Speicher schreibend zugreifen kann,
- als Option im Speicher wenigstens eine der folgenden Einstellungen für die manuelle Betriebsart wählbar ist:
- der Typ des nachgebildeten Getriebes,
- die Zahl der Gänge des nachgebildeten Getriebes,
- das Verhalten des Getriebes, wenn eine das Getriebe antreibende Brennkraftmaschine ihre obere Drehzahlgrenze erreicht,
- das Verhalten des Getriebes, wenn ein Kick-down-Schalter betätigt ist,
**dadurch gekennzeichnet, dass** als Eingabevorrichtung und als Anzeigevorrichtung zur Anzeige der Optionen oder Parameter ein Bordcomputer, ein Navigationssystem, ein Radio oder ein Klimasteuergerät jeweils mit Anzeige- und Bedienelementen wie Tasten vorgesehen ist.

2. Steuervorrichtung nach Anspruch 1 , **dadurch gekennzeichnet, dass** die Eingabevorrichtung eine Bedienvorrichtung zur Auswahl eines Ganges oder einer Übersetzung des Getriebes ist.

3. Steuervorrichtung nach Anspruch 1, **dadurch gekennzeichnet, dass** zur Verbindung zwischen der Eingabevorrichtung und der Steuervorrichtung ein Datenbus vorgesehen ist.

4. Steuervorrichtung nach Anspruch 1, **dadurch gekennzeichnet, dass** eine Eingabe über die Eingabevorrichtung nur während des Stillstandes des Kraftfahrzeuges möglich ist, wobei Stillstand dann erkannt ist, wenn eine Fahrgeschwindigkeit im wesentlichen Null und eine Parkstellung des Getriebes gewählt ist.

5. Steuervorrichtung nach Anspruch 1, **dadurch gekennzeichnet, dass** eine Aktualisierung des Speichers nur dann wirksam wird, wenn eine das Getriebe antreibende Brennkraftmaschine neu gestartet wurde.

6. Steuervorrichtung nach Anspruch 1, **dadurch gekennzeichnet, dass** bei einer erneuten Inbetriebnahme nach einer vorbestimmten Stillstandszeit des Kraftfahrzeuges vorgegebene Optionen ausgewählt sind.

7. Steuervorrichtung nach Anspruch 1, **dadurch gekennzeichnet, dass** die Anzeigevorrichtung zumindest bei Inbetriebnahme des Kraftfahrzeuges aktiviert ist und eine Quittungsvorrichtung vorgesehen ist, über die die angezeigten Optionen oder Parameter betätigbar sind.

8. Steuervorrichtung nach Anspruch 8, **dadurch gekennzeichnet, dass** die Quittungsvorrichtung eine Bedienvorrichtung zur Auswahl eines Ganges oder einer Übersetzung des Getriebes ist.

9. Steuervorrichtung nach Anspruch 1, **dadurch gekennzeichnet, dass** der Speicher mehrere Speicherbereiche aufweist, die über eine zusätzliche Auswählvorrichtung wählbar sind.

10. Steuervorrichtung nach Anspruch 1, **dadurch gekennzeichnet, dass** das Steuerprogramm in der automatischen Betriebsart automatisch Gänge oder Übersetzungen nach Maßgabe von Betriebsparametern des Kraftfahrzeuges einstellt, wobei mehrere Sätze von Zuordnungen von Gängen oder Übersetzungen zu Betriebsparametern vorgesehen sind, und als Option im Speicher ein Satz von Zuordnungen von Gängen oder Übersetzungen zu Betriebsparametern wählbar ist.

11. Steuervorrichtung nach Anspruch 1, **dadurch gekennzeichnet, dass** das Steuerprogramm in der automatischen Betriebsart automatisch Gänge oder Übersetzungen nach Maßgabe von Betriebsparametern des Kraftfahrzeuges einstellt, wobei ein oder mehrere Sätze von Zuordnungen von Gängen oder Übersetzungen zu Betriebsparametern vorgesehen sind, und als Option im Speicher ein zusätzlicher Satz von Zuordnungen von Gängen oder Übersetzungen zu Betriebsparametern wählbar ist.

## Claims

1. A control device for a transmission of a motor vehicle, wherein the transmission is a continuously variable transmission and the control device sets gear speeds or gear ratios of the transmission in accordance with a control program, wherein
- the control program simulates a stepped transmission,
- in addition to an automatic manner of operation, a manual manner of operation controlled by the driver is provided,
- a memory, in which options or parameters or options and parameters for controlling the control program are stored in a variable manner, is provided in the control device, and
- an input device is connected to the memory, wherein the input device can access the memory whilst writing,
- at least one of the following settings for the manual manner of operation is capable of being selected as an option in the memory:
- the type of the simulated transmission,
- the number of the gear speeds of the simulated transmission,
- the behaviour of the transmission when an internal-combustion engine driving the transmission reaches its upper rotational-speed limit,
- the behaviour of the transmission when a kick-down switch is actuated,
**characterized in that** an on-board computer, a navigation system, a radio or an air-conditioning unit with display and operating elements such as buttons in each case is provided as an input device and as a display device for displaying the options or parameters.

2. A control device according to Claim 1, **characterized in that** the input device is an operating device for selecting a gear speed or a gear ratio of the transmission.

3. A control device according to Claim 1, **characterized in that** a data bus is provided for the connexion between the input device and the control device.

4. A control device according to Claim 1, **characterized in that** an input by way of the input device is possible only when the motor vehicle has stopped, wherein the stopping is then recognized when a speed of travel is substantially zero and a parking setting of the transmission has been set.

5. A control device according to Claim 1, **characterized in that** an updating of the memory becomes effective only when an internal-combustion engine driving the transmission has been started once again.

6. A control device according to Claim 1, **characterized in that** pre-set options are selected when starting up takes place once again after a pre-determined stoppage time of the motor vehicle.

7. A control device according to Claim 1, **characterized in that** the display device is activated at least when the motor vehicle is started up, and an acknowledgement device is provided by way of which the options or parameters displayed are actuable.

8. A control device according to Claim 8 [*sic*], **characterized in that** the acknowledgement device is an operating device for selecting a gear speed or a gear ratio of the transmission.

9. A control device according to Claim 1, **characterized in that** the memory has a plurality of memory regions which are capable of being selected by way of an additional selection device.

10. A control device according to Claim 1, **characterized in that**, in the automatic manner of operation, the control program automatically sets gear speeds or gear ratios of the transmission in accordance with operating parameters of the motor vehicle, wherein a plurality of sets of correlations of gear speeds or gear ratios with operating parameters are provided, and a set of correlations of gear speeds or gear ratios with operating parameters is capable of being selected as an option in the memory.

11. A control device according to Claim 1, **characterized in that**, in the automatic manner of operation, the control program automatically sets gear speeds or gear ratios in accordance with operating parameters of the motor vehicle, wherein one or more sets of correlations of gear speeds or gear ratios with operating parameters is or are provided, and an additional set of correlations of gear speeds or gear ratios with operating parameters is capable of being selected as an option in the memory.

## Revendications

1. Dispositif de commande pour une boîte de vitesses de véhicule automobile, dans lequel la boîte de vitesses est une boîte de vitesses à variation continue et le dispositif de commande règle les vitesses ou rapports de la boîte de vitesses en fonction d'un programme de commande, dans lequel :
le programme de commande simule une boîte de vitesses à paliers,
en dehors d'un mode de fonctionnement automatique, il est prévu un mode de fonctionnement manuel influencé par le conducteur,
dans le dispositif de commande, est prévue une mémoire dans laquelle des options et paramètres ou options et paramètres pour influencer le programme de commande sont enregistrés avec possibilité de modifications et
un dispositif d'entrée est connecté à la mémoire, le dispositif d'entrée pouvant avoir accès en écriture à la mémoire,
comme option contenue dans la mémoire, on peut sélectionner au moins un des réglages suivants pour le mode de fonctionnement manuel :
le type de la boîte de vitesses simulée,
le nombre des rapports de la boîte de vitesses simulée,
le comportement de la boîte de vitesses lorsqu'un moteur à combustion interne qui entraîne la boîte de vitesses atteint sa limite de régime supérieure,
le comportement de la boîte de vitesses si un interrupteur de kick-down est actionné
**caractérisé en ce que**, comme dispositif d'entrée et comme dispositif d'affichage destiné à afficher les options et paramètres, il est prévu un ordinateur de bord, un système de navigation, une radio ou un appareil de climatisation, chacun avec des éléments d'affichage et de commande tels que des touches.

2. Dispositif de commande selon la revendication 1, **caractérisé en ce que** le dispositif d'entrée est un dispositif de commande pour le choix d'une vitesse ou d'un rapport de la boîte de vitesses.

3. Dispositif de commande selon la revendication 1, **caractérisé en ce qu'**un bus de données est prévu pour la liaison entre le dispositif d'entrée et le dispositif de commande.

4. Dispositif de commande selon la revendication 1, **caractérisé en ce qu'**une entrée ne peut s'effectuer par le dispositif d'entrée que pendant l'état d'arrêt du véhicule automobile, l'état d'arrêt étant détecté lorsqu'une vitesse de marche est sensiblement nulle et qu'une position de stationnement fixe de la boîte de vitesses est sélectionnée.

5. Dispositif de commande selon la revendication 1, **caractérisé en ce qu'**une actualisation de la mémoire n'est efficace que lorsqu'un moteur à combustion interne qui entraîne la boîte de vitesses est redémarré.

6. Dispositif de commande selon la revendication 1, **caractérisé en ce que**, lors d'une nouvelle mise en marche après un temps d'arrêt prédéterminé du véhicule automobile, des options prédéterminées sont sélectionnées.

7. Dispositif de commande selon la revendication 1, **caractérisé en ce que** le dispositif d'affichage est activé au moins lors de la mise en marche du véhicule automobile et il est prévu un dispositif d'accusé de réception par l'intermédiaire duquel les options ou paramètres affichés peuvent être actionnés.

8. Dispositif de commande selon la revendication 7, **caractérisé en ce que** le dispositif d'accusé de réception est un dispositif de commande destiné à la sélection d'une vitesse ou d'un rapport de la boîte de vitesses.

9. Dispositif de commande selon la revendication 1, **caractérisé en ce que** la mémoire présente plusieurs zones de mémoire qui peuvent être sélectionnées par l'intermédiaire d'un dispositif de sélection supplémentaire.

10. Dispositif de commande selon la revendication 1, **caractérisé en ce que**, dans le type de fonctionnement automatique, le programme de commande règle automatiquement les vitesses ou rapports en fonction de paramètres de fonctionnement du véhicule automobile, plusieurs jeux de combinaisons associant des vitesses ou rapports à des paramètres de fonctionnement étant prévus et il est possible de sélectionner comme option dans la mémoire un jeu de combinaisons associant des vitesses ou rapports à des paramètres de fonctionnement.

11. Dispositif de commande selon la revendication 1, **caractérisé en ce que**, dans le type de fonctionnement automatique, le programme de commande règle automatiquement des vitesses ou rapports en fonction de paramètres de fonctionnement du véhicule automobile, auquel cas un ou plusieurs jeux de combinaisons associant des vitesses ou rapports à des paramètres de fonctionnement sont prévus, et qu'on peut sélectionner comme options dans la mémoire un jeu additionnel de combinaisons associant des vitesses ou de rapports à des paramètres de fonctionnement.
